# EUROPÄISCHE PATENTANMELDUNG

(11) **EP 0 888 919 A2**
(43) Veröffentlichungstag der Anmeldung: **07.01.1999**
(21) Anmeldenummer: 98112146.0
(22) Anmeldetag: 01.07.1998
(51) Int. Cl.: B60J 11/00

(54) **Abdeckvorrictung für Fahrzeugscheiben**

(30) Priorität: 04.07.1997 DE 29711766 U
(71) Anmelder: Kratzmeier, Ewald, 85402 Kranzberg (DE)
(72) Erfinder: Kratzmeier, Ewald, 85402 Kranzberg (DE)
(74) Vertreter: Pfister, Helmut, Dipl.-Ing.

(57) **Zusammenfassung**

Die Abdeckvorrichtung besteht aus formstabilem Material, das sicherstellt, daß die Abdeckung auch an einer gewölbten Fahrzeugscheibe (17) dicht anliegt, wobei dieses Material dieser Oberflächenkontur der Scheibe angepaßt ist. Bevorzugt wird ein Aufbau aus mehreren Schichten. Die Abdeckung ist zusammenklappbar, weil im Bereich der Scharniere die Schicht mit dem formstabilen Material ausgespart ist.

## Beschreibung

Die Erfindung bezieht sich auf eine Abdeckvorrichtung für Fahrzeugscheiben zur Verhinderung der Sonneneinstrahlung in den Innenraum und/oder der Anlagerung von Schnee und Eis gemäß dem Oberbegriff des Schutzanspruchs 1, sowie auf eine Abdeckvorrichtung für Außenspiegel.

Insbesondere bei Fahrzeugen, die im Freien für kürzere oder längere Zeit ungeschützt abgestellt werden, treten aufgrund von Witterungseinflüssen unerwünschte Effekte auf. Im Sommer erhöht sich beispielsweise die Temperatur im Innenraum des Fahrzeugs aufgrund der intensiven Sonneneinstrahlung auf ein unerträgliches Maß, wobei die unerwünschte Erwärmung des Innenraums erst nach längerer Zeit mittels einer eingebauten Klimaanlage oder durch Öffnen der Fenster des Fahrzeugs reguliert werden kann. Andererseits kommt es im Winter zu einer regelmäßigen Eis- bzw. Frostbildung an den Fahrzeugscheiben oder aufgrund von Niederschlägen unmittelbar zu einer Abdeckung mit einer dicken Schneeschicht.

Sowohl das Kühlen des Innenraums im Sommer als auch das Freimachen der Fahrzeugscheiben von Eis und Schnee im Winter mittels sogenannter Eisschaber oder -besen stellt eine zeitaufwendige und mühevolle Prozedur dar, die ein sofortiges Abfahren mit dem Fahrzeug verhindern.

Zur Vermeidung von derartigen Eis- und Schneeanlagerungen auf den Fahrzeugscheiben beziehungsweise einer übermäßigen Erwärmung des Innenraums des Fahrzeugs sind im wesentlichen zwei herkömmliche Abdeckvorrichtungen für Fahrzeugscheiben bekannt.

Gemäß einer ersten herkömmlichen Abdeckvorrichtung wird eine flexible Folie beziehungsweise Matte als Abdeckung für die Fahrzeugscheiben verwendet, die im wesentlichen die Umfangsform einer jeweiligen abzudeckenden Fahrzeugscheibe aufweist und als Befestigungsvorrichtung Klebestreifen, Magnete, Saugnäpfe, usw. verwendet. Nachteilig bei derartigen herkömmlichen Abdeckvorrichtungen sind jedoch die relativ hohen Herstellungskosten sowie die umständliche Handhabung bei der Anbringung der Abdeckung.

Die zweiten herkömmlichen Abdeckvorrichtungen für Fahrzeugscheiben bestehen aus festen Abdeckplatten, die über die jeweilige Fensterscheibe gelegt und beispielsweise durch Andrücken von Saugnäpfen an dieser befestigt werden. Bei dieser Art von Abdeckplatten ist zwar die Handhabung und Anbringung relativ einfach, jedoch ist ihre Schutzwirkung nur relativ gering, da zwischen Fahrzeugscheibe und Abdeckung immer ein mehr oder weniger großer Spalt ausgebildet ist, der das Eindringen von Feuchtigkeit bzw. Schnee ermöglicht und bei starkem Wind bzw. Sturm ein Ablösen der Abdeckung bzw. deren Zerstörung hervorruft.

Der Erfindung liegt daher die Aufgabe zugrunde, eine Abdeckvorrichtung für Fahrzeugscheiben sowie deren Außenspiegel zu schaffen, die besonders witterungsbeständig, kostengünstig herzustellen und am Fahrzeug einfach anzubringen ist.

Diese Aufgabe wird erfindungsgemäß durch die im kennzeichnenden Teil des Anspruchs 1 genannten Merkmale gelöst.

Insbesondere durch die Ausbildung der Abdeckung aus einem formstabilen Material, das im wesentlichen der Oberflächenkontur der Fahrzeugscheibe entspricht, bzw. durch die unmittelbare Anpassung der Abdeckung an die exakte Oberflächenform der jeweiligen Fahrzeugscheiben erhält man eine äußerst witterungsbeständige Abdeckung, die gegenüber Sturm und Wind eine hohe Widerstandsfähigkeit aufweist. Darüber hinaus ist ein Eindringen von Schnee und Feuchtigkeit nahezu 100%-ig ausgeschlossen.

Aufgrund der Verwendung des formstabilen Materials kann die Abdeckung auf einfache Weise von einer Person am Fahrzeug angebracht werden. Insbesondere durch die aus Blechstreifen ausgebildeten Haken für die Seitenscheibenabdeckungen kungen kann diese in Sekundenschnelle auf die Seitenscheibe aufgesteckt und durch Schließen der Seitenscheibe die Abdeckung gegen Diebstahl gesichert werden.

Die zusätzliche Verwendung einer Scheibenwischerabdeckung an der Frontscheibenabdeckung gewährleistet einen sicheren Schutz für die empfindliche Gummibeschichtung der Scheibenwischer.

Besteht die Scheibenabdeckung aus einem Pappmaterial bzw. Karton, der in ähnlicher Weise wie Partyteller geformt und beschichtet ist, so erhält man eine Abdeckvorrichtung für Fahrzeugscheiben, die besonders kostengünstig herzustellen ist.

Insbesondere die Frontscheibenabdeckung kann aus zwei oder mehreren Teilabdeckungen bestehen, die im zusammengeklappten Zustand die Höhe der Seitenabdeckungen aufweisen und somit leicht im Fahrzeuginneren verstaut werden können. Vorzugsweise werden diese einzelnen Teilabdeckungen über eine Klappverbindung wie beispielsweise ein Scharnier miteinander verbunden, wobei an den Schnittstellen Scharniere ausgebildet sind, die den Spalt zwischen den einzelnen Teilabdeckungen überlappen bzw. verschließen und dadurch ein Eindringen von Feuchtigkeit oder Schnee sicher verhindern.

Die Erfindung wird nachstehend anhand von Ausführungsbeispielen unter Bezugnahme auf die Zeichnung näher beschrieben.

Es zeigen:
Fig. 1 eine perspektivische Ansicht eines Fahrzeugs mit der erfindungsgemäßen Frontscheiben- und Seitenscheibenabdeckung;
Fig. 2 eine teilweise Schnittansicht, die die an die Oberflächenkontur der Fahrzeugscheibe angepaßte Frontscheibenabdeckung mit Scheibenwischerabdeckung darstellt;
Fig. 3 eine teilweise Schnittansicht, die eine an die Oberflächenkontur der Fahrzeugscheibe angepaßte Seitenabdeckung mit Haken darstellt;
Fig. 4 ein erstes erfindungsgemäßes Ausführungsbeispiel gemäß einer Seitenscheibenabdeckung;
Fig. 5 ein zweites erfindungsgemäßes Ausführungsbeispiel gemäß einer weiteren Seitenscheibenabdeckung;
Fig. 6 ein drittes erfindungsgemäßes Ausführungsbeispiel gemäß einer weiteren Seitenscheibenabdeckung;
Fig. 7 ein viertes erfindungsgemäßes Ausführungsbeispiel gemäß einer Frontscheibenabdeckung;
Fig. 8 ein fünftes erfindungsgemäßes Ausführungsbeispiel gemäß einer weiteren Frontscheibenabdeckung;
Fig. 9 ein weiteres Ausführungsbeispiel; und
Fig. 10 einen vergrößerten Schnitt durch eine Einzelheit der Erfindung.

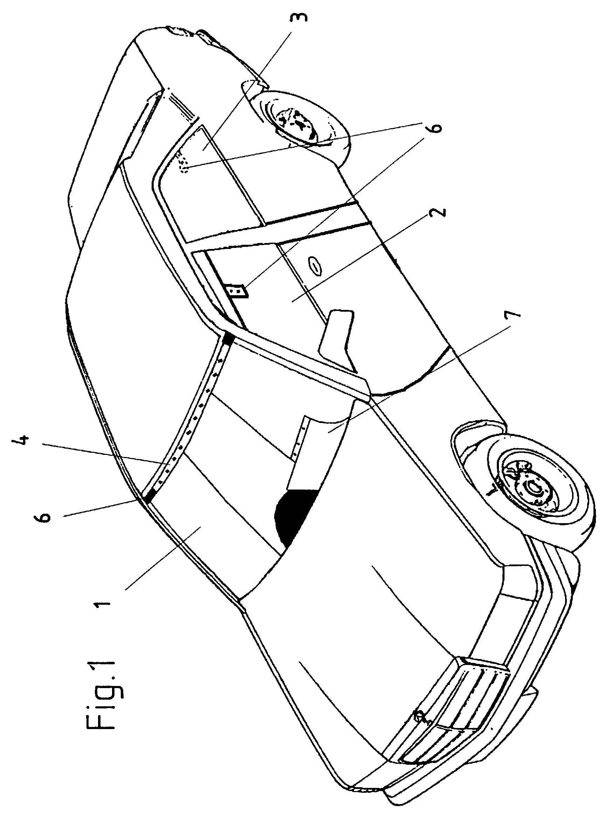

Die Fig. 1 zeigt eine perspektivische Ansicht eines Fahrzeugs zur Veranschaulichung der Abdeckvorrichtung für Fahrzeugscheiben. In der Fig. 1 bezeichnet das Bezugszeichen 1 eine Frontscheibenabdeckung, das Bezugszeichen 2 eine vordere Seitenscheibenabdeckung und das Bezugszeichen 3 eine hintere Seitenscheibenabdeckung. Zur Befestigung der Frontscheibenabdeckung 1 befindet sich an deren oberen Randbereich ein Haltegurt 4, der über eine Kleb-, Niet- oder sonstige Verbindung mit der formstabilen Frontscheibenabdeckung verbunden ist. Der Haltegurt kann sich jedoch auch in einem mittleren oder unteren Bereich der Frontscheibenabdeckung erstrecken. In den Eckbereichen der Frontscheibenabdeckung besitzt der Haltegurt 4 Befestigungselemente 5, die als Fortsatz des Haltegurts 4 über die Frontscheibenabdeckung hinausragen und zur Befestigung zwischen die Karosserie und die Fahrzeugtür eingeklemmt werden können. Alternativ kann der eine Materialverstärkung darstellende Haltegurt 4 auch aus einer anderen Materialverstärkung bestehen, wobei das Befestigungselement in Form eines Bandes, Seiles, usw. an den Eckbereichen der Frontscheibenabdeckung 1 befestigt ist. Demgegenüber bezeichnet das Bezugszeichen 6 ein Befestigungselement für die Seitenscheibenabdeckungen 2 und 3, das auf die Seitenscheiben des Fahrzeuges aufgesteckt oder eingehängt wird. Das Bezugszeichen 7 bezeichnet eine Scheibenwischerabdeckung mit der insbesondere die empfindliche Gummischicht der Scheibenwischer des Fahrzeugs vor Witterungseinflüssen geschützt wird.

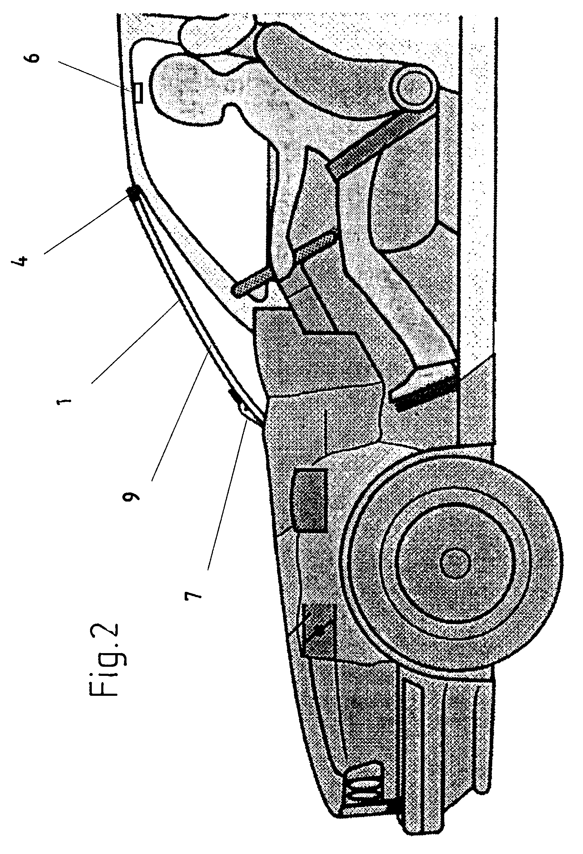

Die Figur 2 zeigt eine teilweise Schnittansicht des Fahrzeugs, bei der in besonders anschaulicher Weise die starke Krümmung von modernen Fahrzeugscheiben dargestellt ist. Aufgrund der stark gekrümmten Oberflächenkontur von Frontscheiben aber auch von Seitenscheiben können herkömmliche Abdeckplatten mit gerader Ebene keine ausreichende Schutzwirkung der Scheiben gewährleisten. Die erfindungsgemäße Fahrzeugscheibenabdeckung ist nunmehr derart ausgestaltet, daß sie der Oberflächenkontur beziehungsweise Krümmung der Fahrzeugscheibe im wesentlichen entspricht und somit ein dreidimensionales Gebilde darstellt, welches unmittelbar auf den jeweiligen Fahrzeugscheiben aufgebracht wird. Durch diese unmittelbare und exakte Anpassung an die jeweilige Form beziehungsweise Oberfläche der Fahrzeugscheiben erhält man einen besonders guten Schutz gegenüber jeder Witterung, wie zum Beispiel Sturm, Schnee, Regen, Sonne, usw.

Vorzugsweise werden die Abdeckungen 1, 2 und 3 aus Pappe oder einem Kartonmaterial in gleicher Weise wie Partyteller ausgeformt und mit einer feuchtigkeitsunempfindlichen Beschichtung versehen oder imprägniert. Alternativ können die Abdeckungen 1, 2 oder 3 auch aus einem formstabilen Kunststoff hergestellt werden wobei die feuchtigkeitsunempfindliche Beschichtung entfallen kann. Die Bearbeitung von derartigen Materialien ist außerordentlich billig und sehr leicht zu bewerkstelligen, was zu einer äußerst kostengünstigen Fahrzeugscheibenabdeckung führt. Da die Fahrzeugscheiben der jeweiligen Hersteller und Fahrzeugtypen sehr unterschiedlich sind besteht für jeden Fahrzeugtyp eine eigene Garnitur bzw. eigener Satz von Abdeckungen. Gleichwohl somit eine Vielzahl von verschiedenen Schablonen beziehungsweise Grundformen nötig sind, ist die Herstellung aufgrund des verwendeten Materials sehr kostengünstig.

Die Fig. 1 und 2 zeigt darüber hinaus eine optional hinzugefügte Scheibenwischerabdeckung 7, die an einer dem Scheibenwischer entsprechenden Stelle auf der formstabilen Frontscheibenabdeckung 1 befestigt ist und aus einem flexiblen Material besteht, welches über den Scheibenwischer gelegt wird und zur Abdichtung unter die Motorhaube geschoben werden kann. Dadurch wird der Scheibenwischer, der zusätzlich als Befestigungsvorrichtung für die formstabile Frontscheibenabdeckung 1 dient gegenüber Witterungseinflüssen geschützt. Die Scheibenwischerabdeckung 7 kann an der Frontscheibenabdeckung 1 festgeklebt, genietet oder anderweitig befestigt werden. Ferner kann die Frontscheibenabdeckung 1 eine in den Figuren nicht dargestellte Ansaug-Luftschacht-Abdeckung aufweisen, die an der unteren Kante der Frontscheibenabdeckung 1 befestigt ist, aus flexiblen Isolierplatten bzw. -matten besteht und zur Abdeckung des Ansaug-Luftschachts unter die Motorhaube geschoben wird.

Die in den Figuren 1 und 2 dargestellte Befestigungsvorrichtung 4 und 5 besteht vorzugsweise aus einem Haltegurt 4, dessen Enden 5 über die Frontscheibenabdeckung 1 seitlich hinausragen und zur Befestigung zwischen die Türe und die Karosserie des Fahrzeugs eingeklemmt werden. Die Befestigungsvorrichtung 4 in Form des Haltegurts kann jedoch auch im mittleren oder unteren Bereich vorgesehen werden oder sogar vollständig fehlen beziehungsweise lediglich durch eine Kanten- bzw. Eckenverstärkung ersetzt werden, an der Schlaufen, Laschen, Bänder usw. als Befestigungselemente 5 befestigt sind. In gleicher Weise können zusätzlich an den unteren Ecken (in der Nähe der Motorhaube) Haltevorrichtungen bzw. Befestigungsvorrichtungen vorgesehen werden. Gemäß einem bevorzugten Ausführungsbeispiel bestehen die als Befestigungselemente 5 dienenden Bänder aus sogenanntem "Klettband", welches auf ein im Türrahmen befestigtes Gegenstück aufgelegt wird und einen Klettverschluß darstellt. Bei Verwendung eines derartigen Befestigungselements 5 ist die Montage besonders einfach, da zunächst bei offenen Türen eine provisorische Befestigung erfolgen kann, die anschließend durch Schließen der Türen zu einer festen Klemm-Befestigung wird.

In ähnlicher Weise wie die Frontscheibenabdeckung 1 sind die Seitenscheibenabdeckungen 2 und 3 unmittelbar an die Oberflächenkontur beziehungsweise Krümmung der Fahrzeugseitenscheiben angepaßt. Dadurch besitzen auch diese Seitenscheibenabdeckungen eine besonders hohe Schutzwirkung gegenüber Frost, Schnee und Sonneneinstrahlung.

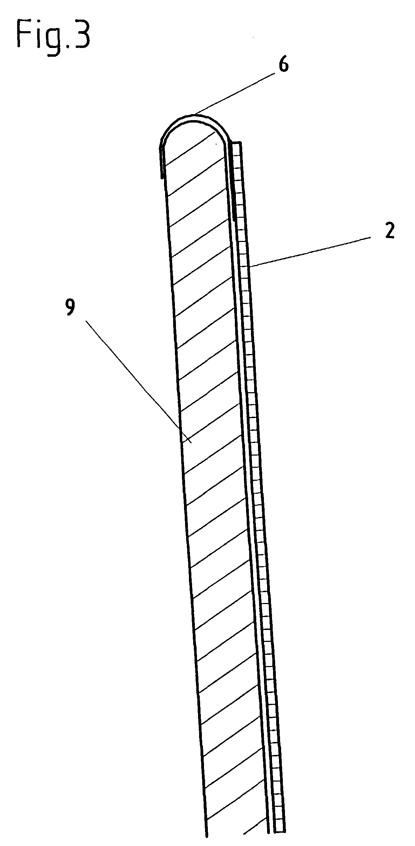

Die Fig. 3 zeigt eine teilweise Schnittansicht der vorderen Seitenscheibe 9 mit Seitenscheibenabdeckung 2, in die ein Haken 6 als Befestigungsvorrichtung eingearbeitet ist.

Die Seitenscheibenabdeckung 2 besteht aus dem gleichen formstabilen Material wie die Frontscheibenabdeckung 1 und wird in ähnlicher Weise wie die Frontscheibenabdeckung an die Oberflächenform bzw. -kontur der Seitenscheibe angepaßt. Zur Befestigung der Seitenscheibenabdeckung 2 an der Seitenscheibe 9 des Fahrzeugs wird in die Seitenscheibenabdeckung 2 ein Haken 6 eingebracht bzw. an der Seitenscheibenabdeckung 2 befestigt, der unmittelbar in die Seitenscheibe 9 eingehängt oder auf diese aufgesteckt werden kann. Vorzugsweise besteht der Haken 6 aus einem Stahlblechstreifen, dessen oberer Rand derart umgebogen ist, daß er in die abgesenkten oder aufgeklappten Seitenscheiben 9 des Fahrzeugs in Sekunden eingehängt bzw. aufgesteckt werden kann und durch Schließen der Seitenscheiben 9 unverrückbar fixiert und gegen Diebstahl gesichert wird. Genauer gesagt wird das in die Seitenscheibe 9 eingehängte Halteblech 6 durch Hochfahren der Scheibe in die obere Scheibenführung eingedrückt.

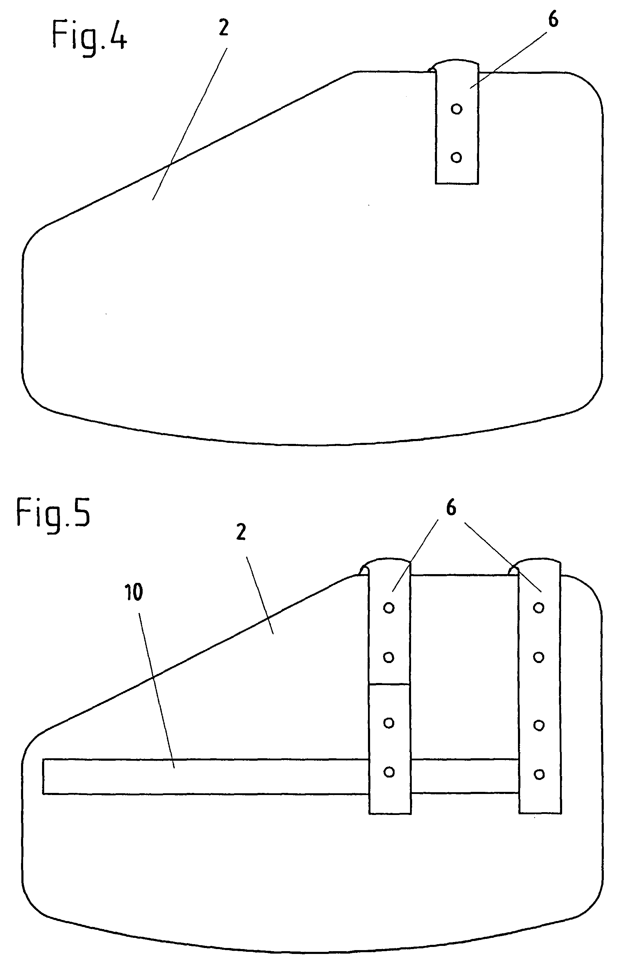

Die Figur 4 zeigt eine Draufsicht eines ersten erfindungsgemäßen Ausführungsbeispiel gemäß einer derartigen Seitenscheibenabdeckung 2 mit Haken 6. Hierbei ist der Haken 6 über Nieten mit der formstabilen Seitenscheibenabdeckung 2 verbunden. Der Haken 6 kann jedoch auch aufgeklebt, aufgeschraubt oder direkt in die Abdeckung eingearbeitet werden. Zur weiteren Steigerung der Stabilität der Seitenscheibenabdeckung 2 kann gemäß Fig. 5 ferner ein Stützelement 10 in die Seitenscheibenabdeckung 2 eingearbeitet werden, wobei sich das Stützelement 10 entlang der oder den Hauptoberflächenrichtung(en) erstreckt. Alternativ kann das Stützelement 10 auch an der Oberseite der Seitenscheibenabdeckung 2 befestigt werden und besteht vorzugsweise wie der Haken 6 aus einem Stahlblechstreifen. Im Gegensatz zur Fig. 4 besitzt die Seitenscheibenabdeckung 2 zwei Haken 6, die als Befestigungselemente dienen, wobei die beiden Haken 6 in Verbindung mit dem Stützelement 10 eine besonders hohe Stabilität und somit einfache Handhabbarkeit der Seitenscheibenabdeckung 2 gewährleisten. Aufgrund der hohen Formstabilität können die Seitenscheibenabdeckungen 2 einerseits besonders schnell montiert werden, während sie andererseits einen außerordentlichen Schutz gegenüber Diebstahl und unterschiedlichsten Witterungsverhältnissen bieten.

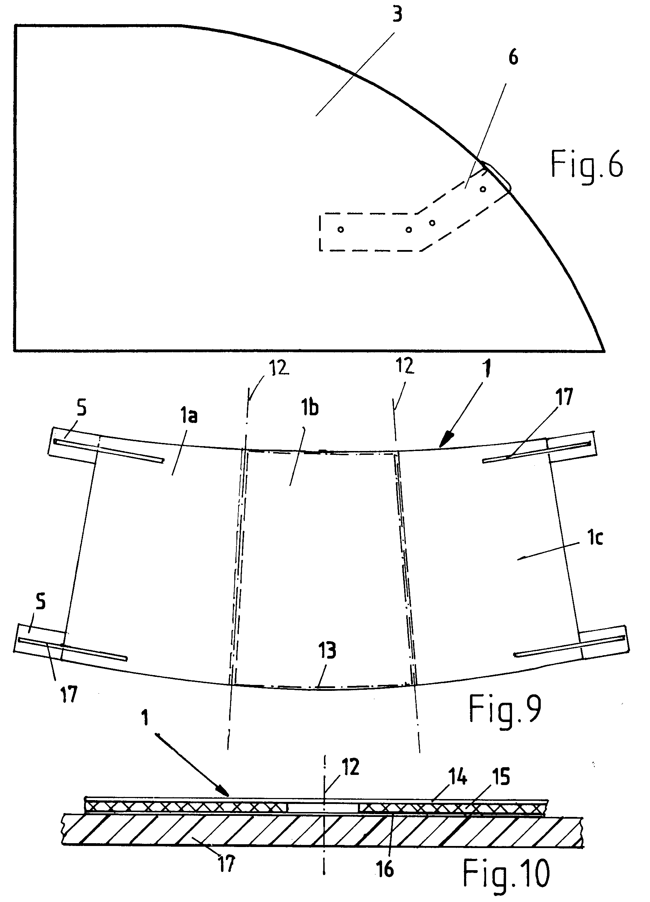

Die Fig. 6 zeigt schließlich ein weiteres erfindungsgemäßes Ausführungsbeispiel der Seitenscheibenabdeckung 3 für eine hintere Seitenscheibe, die oftmals nur geklappt werden kann. In diesem Fall befindet sich der Haken 6 an der schräg laufenden Seite der Seitenscheibenabdeckung 3, während er zur Unterstützung der Stabilität in einem mittleren Bereich einen Knick in Längsrichtung aufweist. Die Seitenscheibenabdeckung 3 wird in gleicher Weise wie die Seitenscheibenabdeckung 2 auf eine Seitenscheibe aufgesteckt, wobei diese durch Schließen bzw. Zuklappen der Seitenscheibe sicher arretiert und gegen Diebstahl gesichert wird.

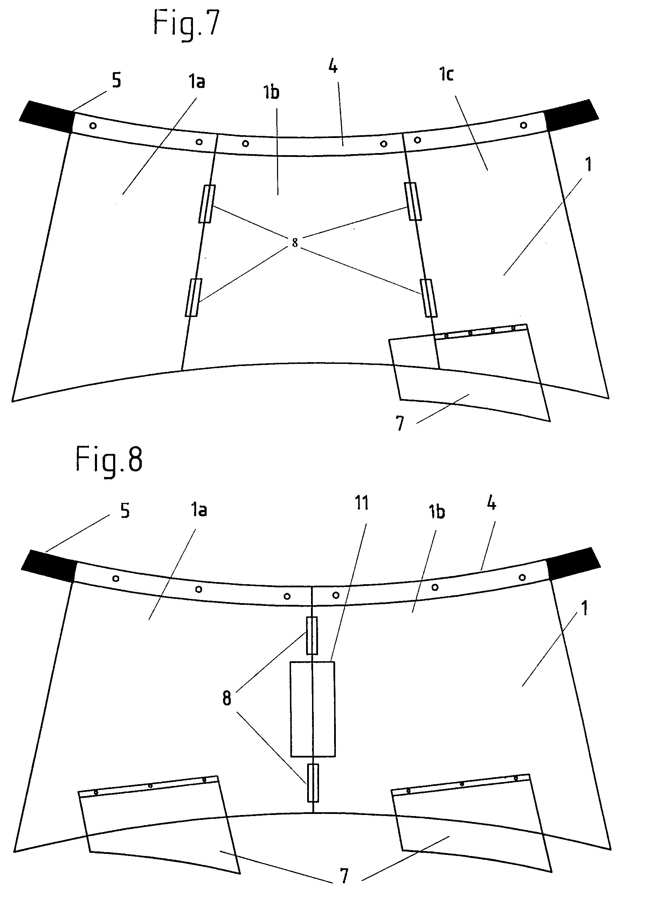

Die Fig. 7 zeigt ein weiteres erfindungsgemäßes Ausführungsbeispiel, das die Frontscheibenabdeckung 1 im einzelnen darstellt. Hierbei ist die Frontscheibenabdeckung 1 dreigeteilt und besteht somit aus drei Teilabdeckungen 1a, 1b, 1c, die über Verbindungselemente 8 sowie über den Haltegurt 4 miteinander verbunden werden. Wie bereits vorstehend beschrieben wurde, dient der Haltegurt 4 mit seinen überstehenden Enden 5 der Befestigung der Frontscheibenabdeckung 1. Die Verbindungselemente 8 dienen als Scharniere und bestehen vorzugsweise aus einem flexiblen Material, welches an den jeweiligen Teilabdeckungen 1a, 1b und 1c befestigt ist. Vorzugsweise wird für die Verbindungselemente bzw. Scharniere 8 eine reißfeste Folie, ein Klebeband oder dergleichen verwendet. Es können jedoch auch aus Papier beziehungsweise Pappe bestehende Verbindungselemente verwendet werden. Bei dieser dreiteiligen Frontscheibenabdeckung wird die Scheibenwischerabdeckung 7 vorzugsweise nur an der Teilabdeckung 1c befestigt, während sie die Teilabdeckung 1b überlappt. Ansonsten entspricht die Scheibenwischerabdeckung 7 hinsichtlich ihrer Funktion und Ausgestaltung der vorstehend beschriebenen Scheibenwischerabdeckung.

Gemäß einem bevorzugten Ausführungsbeispiel besitzen die senkrechten Randbereiche der Teilabdeckungen 1a, 1b und 1c Verstärkungen, die beispielsweise aus einem um 90° abgekanteten Blechstreifen oder einem U-Profil bestehen. Dadurch werden die Randbereiche der Teilabdeckungen zusätzlich formstabilisiert und ein spaltfreier Zusammenbau wird ermöglicht. Ein derartig abgekanteter Blechstreifen besitzt darüber hinaus den Vorteil, daß er mühelos der Scheibenform angepaßt werden kann und eine absolut sichere Scharniermontage ermöglicht. Ferner findet ein nachträglich aufgebrachter Isolierschutz oder ein Abdeckmaterial einen sehr beständigen Seitenschutz.

Gemäß einem weiteren Ausführungsbeispiel besteht die in Fig. 7 dargestellte Frontscheibenabdeckung 1 weiterhin aus einem einstückigen formstabilen Material, das jedoch an den Schnittstellen zwischen den Flächen 1a, 1b und 1c Falzstellen aufweist, die ein Zusammenfalten beziehungsweise Zusammenklappen der Frontscheibenabdeckung ermöglichen. Bei dieser einstückigen Frontscheibenabdeckung sind die Scharniere 8 überflüssig, da ihre Funktion durch die Falzstellen übernommen wird.

Die Fig. 8 zeigt ein weites Ausführungsbeispiel für die Frontscheibenabdeckung 1, wobei im Unterschied zu Fig. 7 die Frontscheibenabdeckung 1 lediglich zwei Teilabdeckungen 1a und 1b aufweist, die jedoch jeweils eine Scheibenwischerabdeckung 7 besitzen. Die weiteren Elemente gemäß diesem Ausführungsbeispiel entsprechen den vorstehend beschriebenen Ausführungsbeispielen, weshalb auf ihre Beschreibung verzichtet wird. Im Gegensatz zum Ausführungsbeispiel gemäß Fig. 7 besitzt jedoch die Frontscheibenabdeckung 1 gemäß Fig. 8 eine zusätzliche Spaltabdeckung 11, die den zwischen den Teilabdeckungen 1a und 1b entstehenden Spalt bedeckt und ein Eindringen von Schnee, Wasser und dergleichen verhindert. In einem bevorzugten Ausführungsbeispiel kann die Funktion der Scharniere 8 und der Abdeckung 11 miteinander kombiniert werden, wodurch sich ein den Spalt zwischen den Teilabdeckungen 1a und 1b abdeckendes Verbindungselement ergibt.

Vorzugsweise sind die Frontscheibenabdeckungen gemäß Fig. 7 und 8 derart aufgeteilt, daß ihre Höhe im zusammengeklappten bzw. -gefalteten Zustand der Höhe der jeweiligen Seitenscheibenabdeckungen entspricht. Dadurch können sie gemeinsam besonders einfach und platzsparend im Fahrzeug verstaut werden.

Die Außenseite der Frontscheibenabdeckung 1 sowie der Seitenscheibenabdeckungen 2 und 3 können für Werbezwecke benützt und optisch ausgestaltet werden.

Um einen besonders guten Sonnenschutz mittels der Scheibenabdeckung zu erreichen, kann die Innen- und/oder Außenseite mit einer wärmeisolierenden und/oder -reflektierenden Schicht versehen sein, die beispielsweise aus einer hochreflektierenden Aluminiumfolie oder dergleichen besteht.

Zur Vervollständigung der Schutzwirkung durch die erfindungsgemäße Abdeckvorrichtung kann ferner eine Abdeckvorrichtung für die Außenspiegel des Fahrzeugs vorgesehen sein, die im wesentlichen die Umfangsform einer jeweiligen Spiegelfläche aufweist und der Oberflächenkontur des Spiegels angepaßt ist. Die Abdeckvorrichtung wird auf einfache Weise durch ein Gummi-, Gewebeband oder dergleichen am Gehäuse befestigt. Vorzugsweise umspannt das Gummi- oder Gewebeband das Gehäuse des Außenspiegels, es kann jedoch auch andersartig befestigt werden. Bei Verwendung des Gewebebandes kommt insbesondere ein Klettverschluß bzw. -band in Betracht.

In der Fig. 9 ist ein weiteres Ausführungsbeispiel der Erfindung dargestellt. Die dort gezeigte Abdeckung 1 besteht aus den drei Teilen 1 a, 1 b und 1 c. Längs der strichpunktierten Linien 12 sind die Teilabdeckungen untereinander verbunden. Entlang der Linien 12 können die einzelnen Teilabdeckungen umgefaltet werden und die Anordnung ist dabei derart getroffen, daß die einzelnen Teilabdeckungen 1 a, 1 b oder 1 c nach der Umfaltung weitgehend deckungsgleich aufeinanderliegen. In der Fig. 9 ist angedeutet, daß die Teilabdeckung 1 a nach dem Umfalten auf der Teilabedeckung 1 b aufliegt, wie durch die strichpunktierten Linien 13 gezeigt ist.

Es ist klar, daß eine Anordnung wie diejenige nach der Fig. 9 auch dahingehend abgewandelt werden können, daß die Abdeckung 1 auch aus zwei Teilabedeckungen bestehen kann, die jeweils die gleiche Größe besitzen, so daß sie aufeinandergeklappt werden können. Die Anordnung gemäß Fig. 9, aber auch diejenige gemäß den Fig. 7 und 8 erlaubt es, die Abdeckung leicht im Kofferraum oder dergleichen zu verstauen.

Wenn die Abdeckung auch formstabil ist, so ist sie doch im begrenzten Umfange elastisch verformbar, so daß sie im zusammengefalteten Zustand nur wenig Platz verlangt. Dies gilt insbesondere dann, wenn die abzudeckende Scheibe des Fahrzeuges und damit auch die Abdeckung nur in einer Ebene gewölbt ist, wie es bei zylinderartigen oder kegelartigen Flächen der Fall ist, die abwickelbar sind.

Fig. 10 zeigt in einem vergrößerten Schnitt den Teil einer Fahrzeugscheibe, insbesondere eine Frontschutzscheibe 17, auf der eine Abedeckung 1 aufliegt. Die Abdeckung selbst ist bei diesem Ausführungsbeispiel aus drei Schichten aufgebaut, und zwar aus einer äußeren Schicht 14, einer mittleren Schicht 15 und einer unteren bzw. inneren Schicht 16, mit der die Abdeckung 1 auf der Scheibe 17 aufliegt.

Die äußere Schicht hat dabei im wesentlichen die Aufgabe die Wasserdichtheit bzw. Feuchtigkeitsdichtheit herbeizuführen. Auch ist diese Schicht insbesondere wärmeisolierend und weitgehend unempfindlich gegen Sonnenstrahlen. Die Schicht besteht aus PVC, vorzugsweise bestehen auch die anderen Schichten aus solchem Material. Die Stärke der äußeren Schicht kann etwa 0,4 mm betragen.

Die mittlere Schicht 15 dient als Trägerschicht und hat die Aufgabe die Formstabilität herbeizuführen, so daß die ganze Abdeckung 1 bei geeigneter Verformung der Verformung der Scheibe 13 weitgehend entspricht, so daß die Abdeckung 1 auch bei gewölbten Scheiben gut auf der Scheibe aufliegt. Diese verhältnismäßig steife Trägerschicht hat vorzugsweise eine Stärke von etwa 1,0 mm.

Die unterste Schicht 16 in einer Stärke von etwa 0,3 bis 0,4 mm ist insbesondere wasserdicht, um ein Anfrieren der Abdeckung an der Scheibe auszuschließen.

Die einzelnen Schichten sind untereinander verbunden, beispielsweise verklebt oder aufeinandergesiegelt oder auch miteinander verschweißt.

Die Ausbildung aus mehreren Schichten hat insbesondere den Vorteil, daß es hierdurch möglich wird, auf die besondere Anordnung von Scharnieren oder dergleichen zwischen den einzelnen Abdeckungsteilen 1 a, 1 b bzw. 1 c zu verzichten. Dies ist in der Fig. 10 dargestellt. Während die äußeren und inneren Schichten 14 und 16 sich über die ganze Abdeckung 1 erstrecken, erstrecken sich die mittleren Schichten 15, also die Trägerschichten bzw. die formstabilen Schichten, nicht in dem Bereich der Scharnierlinie 12. Auf diese Weise läßt sich in einfacher Art eine Scharnierbildung erzielen, um die einzelnen Abdeckungsteile zusammenfalten zu können, wie dies oben beschrieben ist.

Es empfiehlt sich in die Befestigungselemente 5, die zur Einklemmung im Türspalt dienen, wenn die Abdeckung als Abdeckung der Frontscheibe ausgebildet ist, Verstärkungselemente 17 zu verwenden, die beispielsweise aus Stahldrähten oder Stahldrahtseilen bestehen können. Diese Verstärkungselemente 17 verhindern ein Abtrennen der Befestigungselemente 5 durch einfache Schneidmittel und stellen insofern einen Diebstahlschutz dar. Dies ist in der Fig. 9 dargestellt.

Die jetzt mit der Anmeldung und später eingereichten Ansprüche sind Versuche zur Formulierung ohne Präjudiz für die Erzielung weitergehenden Schutzes.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

## Patentansprüche

1. Abdeckvorrichtung für Fahrzeugscheiben zur Verhinderung der Sonneneinstrahlung in den Innenraum und/oder der Anlagerung von Schnee und Eis mit einer Abdeckung (1, 2, 3 ), die im wesentlichen die Umfangsform einer jeweiligen abzudeckenden Fahrzeugscheibe (9) aufweist, und einer Befestigungsvorrichtung (5, 5, 6) zum Befestigen der Abdeckungen (1, 2, 3) am Fahrzeug, **dadurch gekennzeichnet, daß** die Abdeckungen (1, 2, 3) aus einem formstabilen Material besteht und im wesentlichen die Oberflächenkontur der Fahrzeugscheibe (9) aufweist.

2. Abdeckvorrichtung nach Anspruch 1, **dadurch gekennzeichnet, daß** die Abdeckung (1) als Frontscheibenabdeckung ausgebildet ist und aus mehreren, gelenkig miteinander verbundenen Teilabdeckungen (1a, 1b, 1c) besteht.

3. Abdeckvorrichtung nach Anspruch 2, **dadurch gekennzeichnet, daß** die senkrechten Randbereiche der Abdeckung (1) und/oder der Teilabdeckungen (1a, 1b, 1c) mit Verstärkungselementen verstärkt sind.

4. Abdeckvorrichtung nach Anspruch 3, **dadurch gekennzeichnet, daß** die Verstärkungselemente aus Metall, insbesondere aus Blechstreifen oder Stahldrähten bestehen.

5. Abdeckvorrichtung nach einem der Ansprüche 2 bis 4, **dadurch gekennnzeichnet, daß** die Abdeckung (1) an einer einem Scheibenwischer entsprechenden Stelle eine Scheibenwischerabdeckung (7) zum Schutz des Scheibenwischers aufweist.

6. Abdeckvorrichtung nach Anspruch 5, **dadurch gekennzeichnet, daß** die Scheibenwischerabdeckung (7) aus einem flexiblen oder formstabilen Material besteht, das an der Abdeckung (1) befestigt ist.

7. Abdeckvorrichtung nach einem der Ansprüche 2 bis 6, **dadurch gekennzeichnet, daß** die Befestigungsvorrichtung (4, 5) zumindest einen flexiblen Haltegurt (4) aufweist, der zumindest am türseitigen Randbereich der Abdeckung (1) mit dieser verbunden ist und dessen über die Abdeckung (1) hinausragenden Enden als Befestigungselemente (5) zwischen Tür und Karosserie des Fahrzeugs eingeklemmt werden.

8. Abdeckvorrichtung nach Anspruch 7, **dadurch gekennzeichnet, daß** die Befestigungselemente (5) aus Klettbändern bestehen, die in Verbindung mit im Türrahmen befestigten Klett-Gegenstücken einen Klettverschluß ausbilden.

9. Abdeckvorrichtung nach einem der Ansprüche 2 bis 8, **dadurch gekennzeichnet, daß** die Abdeckung (1) eine Ansaug-Luftschacht-Abdeckung aufweist, die am unteren Bereich der Abdeckung (1) befestigt ist, aus einem flexiblen Material besteht und zum Abdecken des Ansaug-Luftschachts unter die Motorhaube geschoben wird.

10. Abdeckvorrichtung nach Anspruch 1, **dadurch gekennzeichnet, daß** die Abdeckung (2, 3) eine Seitenscheidenabdeckung ist.

11. Abdeckvorrichtung nach Anspruch 10, **dadurch gekennzeichnet, daß** die Befestigungsvorrichtung (6) aus zumindest einem formstabilen Haken besteht, der mit der Abdeckung (2, 3) fest verbunden ist und mit der Fahrzeugscheibe (9) eine lösbare Hänge-/Steckverbindung darstellt.

12. Abdeckvorrichtung nach Anspruch 11, **dadurch gekennzeichnet, daß** der zumindest eine formstabile Haken (6) mit einem Stützelement (10) verbunden ist, das sich zur Erhöhung der Formstabilität der Abdeckung (2, 3) entlang der Haupt-Oberflächenrichtung der Abdeckung erstreckt.

13. Abdeckvorrichtung nach Anspruch 11 oder 12, **dadurch gekennzeichnet, daß** der formstabile Haken (6) und das Stützelement (10) aus einem Blechstreifen geformt sind.

14. Abdeckvorrichtung nach einem der Ansprüche 1 bis 13, **dadurch gekennzeichnet, daß** die Abdeckung (1, 2, 3) aus formstabiler Pappe oder einem Karton besteht.

15. Abdeckvorrichtung nach einem der Ansprüche 1 bis 14, **dadurch gekennzeichnet, daß** die Abdeckung (1, 2, 3) aus einem formstabilen Kunststoff besteht.

16. Abdeckvorrichtung nach Anspruch 14, **dadurch gekennzeichnet, daß** das Pappmaterial oder der Karton beschichtet und/oder imprägniert ist.

17. Abdeckvorrichtung nach einem der Ansprüche 1 bis 16, **dadurch gekennzeichnet, daß** die Außen- und/oder Innenflächen der Abdeckung (1, 2, 3) eine wärmeisolierende und/oder strahlungsreflektierende Schicht aufweisen.

18. Abdeckvorrichtung für Außenspiegel zur Verhinderung der Anlagerung von Schnee und Eis mit einer Abdeckung, die im wesentlichen die Umfangsform eines jeweiligen Spiegels aufweist, und einer Befestigungsvorrichtung zur Befestigung der Abdeckung am Gehäuse des Außenspiegels, wobei die Abdeckung im wesentlichen die Oberflächenkontur des jeweiligen Spiegels aufweist.

19. Abdeckvorrichtung nach Anspruch 18, **dadurch gekennzeichnet, daß** die Befestigungsvorrichtung aus einem Gummi- oder Klettband besteht, das das Gehäuse des Außenspiegels umspannt.

20. Abdeckvorrichtung nach einen der Ansprüche 1 bis 19, **dadurch gekennzeichnet, daß** die Abdeckung (1, 2, 3) aus mehreren aufeinanderliegenden Schichten (14, 15, 16) besteht, wobei mindestens eine Schicht (15) aus formstabilem Material besteht.

21. Abdeckvorrichtungen nach Anspruch 20, **dadurch gekennzeichnet, daß** die obere und/oder untere Schicht (14, 16) feuchtigkeitsundurchlässig ist.

22. Abdeckvorrichtung nach Anspruch 21 oder 22, **dadurch gekennzeichnet, daß** die formstabile Schicht (15) an der Stoßstelle (12) der Teilabdeckungen (1a, 1b, 1c) ausgespart ist und die Teilabdeckungen durch die flexiblen äußeren Schichten bzw. äußere Schicht (14, 16) untereinander verbunden sind.
